# EUROPÄISCHE PATENTSCHRIFT

(11) **EP 0 907 496 B1**
(45) Veröffentlichungstag und Bekanntmachung des Hinweises auf die Patenterteilung: **07.11.2001**
(21) Anmeldenummer: 97924977.8
(22) Anmeldetag: 22.05.1997
(51) Int. Cl.: B29C 55/12, C08K 5/01, C08L 23/10

(54) **VERFAHREN ZUR HERSTELLUNG EINER BIAXIAL ORIENTIERTEN POLYPROPYLENFOLIE**
PROCESS FOR PRODUCING A BIAXIALLY ORIENTED POLYPROPYLENE FOIL
PROCEDE DE FABRICATION D'UNE FEUILLE DE POLYPROPYLENE A ORIENTATION BIAXIALE

(30) Priorität: 31.05.1996 DE 19622083
(43) Veröffentlichungstag der Anmeldung: 14.04.1999
(73) Patentinhaber: Brückner Maschinenbau GmbH, 83313 Siegsdorf (DE)
(72) Erfinder: ECKART, Ludwig, D-83278 Traunstein (DE); BRAUN, Ruthard, D-83313 Siegsdorf (DE); STOPPERKA, Klaus, D-06849 Dessau (DE); SCHWUCHOW, Rainer, D-83355 Grabenstätt (DE)
(74) Vertreter: Flach, Dieter Dipl.-Phys.
(86) Internationale Anmeldenummer: EP9702635
(87) Internationale Veröffentlichungsnummer: WO9746369

(56) Entgegenhaltungen:
- EP-A- 0 341 188
- EP-A- 0 563 818
- EP-A- 0 595 252
- WO-A-95/02638
- WO-A-95/06556
- GB-A- 1 338 724
- US-A- 4 045 515
- US-A- 5 081 322
- PATENT ABSTRACTS OF JAPAN vol. 18, no. 528 (C-1258), 6.Oktober 1994 & JP 06 184371 A (CHISSO CORP), 5.Juli 1994,
- PATENT ABSTRACTS OF JAPAN vol. 16, no. 63 (C-911), 18.Februar 1992 & JP 03 260111 A (MITSUI PETROCHEM IND LTD), 20.November 1991,

## Beschreibung

Die vorliegende Erfindung betrifft ein Verfahren zur Herstellung einer biaxial orientierten Polypropylenfolie, das es ermöglicht, die zum Erzielen der biaxialen Orientierung erforderliche Verstreckung mit hoher Geschwindigkeit bei hoher Zuverlässigkeit durchzuführen, sowie die Verwendung eines Additivs, das die Durchführung des erfindungsgemäßen Verfahrens ermöglicht.

Das übliche Verfahren des Standes der Technik für die Herstellung von biaxial orientierten Polypropylenfolien umfaßt die folgenden üblichen Schritte:

Ein Polypropylen-Ausgangsmaterial, das üblicherweise ein überwiegend isotaktisches Polypropylen-Homopolymeres mit hohem Molekulargewicht ist, z.B. mit einem Gewichtsmittel des Durchschnittsmolekulargewichts M_{w} von ca. 300.000 g/mol sein kann, und das geringere Mengen an Additiven für die Verbesserung der Verarbeitbarkeit und Handhabbarkeit des Endprodukts aufweist, wird in Form einer homogenen Schmelze durch eine Breitschlitzdüse extrudiert und unter Verwendung von einer oder mehreren Kühlwalzen zu einer auch "Castfilm" oder "Vorfolie" genannten relativ dicken Primärfolie verfestigt.

Diese Primärfolie wird anschließend wieder erwärmt, um sie auf eine für das nachfolgende Verstrecken oder Recken geeignete Temperatur zu bringen. Das Verstrecken kann nacheinander, d.h. sequentiell, zuerst in Längs- oder Maschinenrichtung (MDO), und zwar unter Verwendung eines Satzes von Walzen, die die Folie mit zunehmender Geschwindigkeit fördern und dabei verstrecken, und anschließend in Querrichtung (TDO) erfolgen. Das Recken in Maschinenrichtung und in Querrichtung erfolgt dabei auf Werte im Bereich von jeweils dem 5- bis 12-fachen der Ausgangslänge oder -breite, wobei der Grad der Verstreckung in der einen Richtung den möglichen Verstreckungsgrad in der anderen Richtung beeinflußt.

Das Verstrecken kann jedoch auch als simultanes Verstrekken, d.h. ein Verstrecken gleichzeitig in Längs- und Querrichtung, durchgeführt werden. Dabei wird die Primärfolie von Kluppen an den Rändern erfaßt und in der Reckzone durch divergent verlaufende Führungsschienen quergereckt und dabei gleichzeitig, z.B. mittels eines sog. Progressivspindelpaares oder mittels eines Linearmotorsystems, die den Abstand benachbarter Kluppen zunehmend vergrößern, längsgereckt.

Während der Verstreckung wird die Temperatur der Folie durch geeignete Maßnahmen in dem für die Verstreckung erforderlichen Temperaturbereich gehalten, und nach dem Verstrecken wird die Folie, in der Regel unter kontrollierten Bedingungen und gleichzeitigem Tempern zum Spannungsausgleich, abgekühlt und aufgewickelt. Die Verstrekkungsmaschinen werden gegenwärtig mit Maschinengeschwindigkeiten, und zwar angegeben als Maximalgeschwindigkeit, die die Folie nach dem Verstrecken in Längsrichtung erreicht und z.B. unmittelbar vor dem Aufwickeln aufweist, im Bereich von 150 bis ca. 350 m/min betrieben. Wenn man versucht, ein übliches Polypropylen-Ausgangsmaterial des Standes der Technik mit höheren Maschinengeschwindigkeiten zu verstrecken, stößt man auf das Problem, daß ein stabiler Produktionsbetrieb nicht gewährleistet werden kann, da es in einem für die industrielle Produktion unannehmbaren Ausmaße zu einem Folienabriß kommt.

Es ist davon auszugehen, daß der Grund für derartige Folienabrisse bei hohen Verstreckungsgeschwindigkeiten darin zu suchen ist, daß die beim Verstrecken auf molekularer Ebene in der Folie verzögert ablaufenden Platzwechselvorgänge zu einem Aufbau von lokalen Spannungen führen, die bei hohen Maschinengeschwindigkeiten nicht schnell genug relaxieren können und zu einem Abriß der Folie während des Verstreckens führen. Als Verstrecken mit hoher Geschwindigkeit soll dabei hier wie in der gesamten Anmeldung ein Verstrecken mit Maschinengeschwindigkeiten von 350 m/min und mehr bezeichnet werden, wobei die Obergrenze bei etwa 500 m/min liegen dürfte.

Auch bei einem Verstrecken mit niedrigeren Geschwindigkeiten äußert sich eine unzureichende innere Relaxation von Spannungen in der Folie, die während des Verstreckungsprozesses aufgebaut werden, nachteilig in der Qualität des erhaltenen Folien-Endprodukts. Folienbereiche, in denen innere Spannungen nicht ausreichend durch Relaxation abgebaut werden konnten, bilden in der Folie Störstellen, die sich als Strukturfehler äußern, z.B. als Ungleichmäßigkeiten bei der Dicke und/oder Transparenz bzw. als Verzerrungen oder als unzureichende Dimensionsstabilität. Maßnahmen, die die innere Relaxationsgeschwindigkeit erhöhen, bewirken daher auch unter Bedingungen, bei denen der Folienabriß normalerweise noch kein Problem darstellt, d.h. bei an sich bereits üblichen Maschinengeschwindigkeiten unter 350 m/min, eine Verbesserung der Produktqualität und Prozeßstabilität.

Es ist somit Aufgabe der vorliegenden Erfindung, ein Verfahren zur Herstellung von biaxial orientierten Polypropylenfolien zu schaffen, das eine hohe Produktionsstabilität und Produktqualität bei hohen Verstreckungsgeschwindigkeiten von mehr als 350 m/min gewährleistet.

Diese Aufgabe wird durch ein Verfahren gemäß Patentanspruch 1 und eine Verwendung gemäß Anspruch 5 gelöst, wobei nähere Einzelheiten zu der bevorzugten Ausführungsform den Unteransprüchen entnommen werden können.

Die Verwendung von isotaktischen Polypropylenwachsen als Additive zu Polypropylen-Ausgangsmaterialien, die die Schaffung des erfindungsgemäßen Verfahrens ermöglicht, wird in Anspruch 9 beansprucht.

Die Erfindung beruht somit auf der Maßnahme, einem Polypropylen-Ausgangsmaterial für die Herstellung einer biaxial orientierten Polypropylenfolie ein Polypropylenwachs zuzusetzen, sowie auf der Nutzung der sich daraus ergebenden neuen technologischen Möglichkeiten. Im Rahmen der vorliegenden Anmeldung wird dabei als Polypropylenfolie normalerweise eine einschichtige klare Folie bezeichnet, ohne daß damit eine Einbindung einer solchen Folie in einen Folienverband, z.B. durch anschließendes Kaschieren oder Koextrusion, ausgeschlossen wird.

Der Begriff "Polypropylen" bzw. "Polypropylen-Homopolymeres" umfaßt im Rahmen der vorliegenden Anmeldung Polypropylenmaterialien, die durch Polymerisation unter Verwendung von Ziegler-Natta-Katalysatoren oder unter Verwendung von Metallocen-Katalysatoren hergestellt wurden. Diese Polypropylenmaterialien können somit sein isotaktisches Polypropylen mit einem Isotaktizitätsindex > 85%, syndiotaktisches Polypropylen und auch beliebige Mischungen beider Arten von Polypropylen.

Es ist aus dem Stand der Technik zwar bereits bekannt, einem Polypropylen-Ausgangsmaterial für die Folienherstellung verschiedene Additive zuzusetzen, die verschiedene Wirkungen aufweisen und von denen einige auch als sogenannte "innere Gleitmittel" bezeichnet werden. Im Bereich der Kunststoffverarbeitung sind dabei die vielfältigsten Typen von Gleitmitteln in Verwendung, die - in einer Reihe abnehmender Polarität - Verbindungen umfassen, die zu den Fettalkoholen, Fettalkoholdicarbonsäureestern, Fettsäureestern, Fettsäuren, Fettsäuremonoamiden, Fettsäurediamiden, Metallseifen, oligomeren Fettsäureestern, Fettalkohol-Fettsäureestern, Wachssäuren, Wachssäureestern, polaren Polyethylenwachsen, unpolaren Polyethylenwachsen sowie schließlich zu den Paraffinen gehören. Unter den im Stand der Technik als Kunststoffadditive verwendeten Paraffinen sind insbesondere Polyethylenwachse zu nennen. So wird in der WO 95/06556 die Verwendung eines niedermolekularen Paraffinwachses mit einem Durchschnittsmolekulargewicht im Bereich von 300 bis 1000, insbesondere eines Polyethylenwachses, in der Kernschicht einer biaxial orientierten mehrschichtigen Polypropylenfolie beschrieben, um die Barriereeigenschaften der Folie zu verbessern. Die Verwendung von Polypropylenwachsen im Sinne der vorliegenden Anmeldung wird genausowenig beschrieben wie eine mögliche Beeinflussung der morphologischen Vorgänge während des Reckens einer Folie.

In der EP-A-0 595 252 wird die Mitverwendung von niedermolekulargewichtigen Polyethylen- oder Polypropylenwachsen in den Schichten einer dreischichtigen koextrudierten Schrumpffolie beschrieben, die Außenschichten aus Polypropylen aufweisen kann. Die in der genannten Schrift als Additive erwähnten Kohlenwasserstoffharze oder -wachse weisen Molmassen im Bereich von etwa 900 bis etwa 4.500 auf. Eine positive Beeinflussung des Reckverhaltens ist nicht erwähnt.

Auch aus der US-PS 3,536,644 ist die Verwendung von Wachsen als Additive für Polypropylenfolien erwähnt. Die Wachse sind niedermolekulare Polyethylenwachse und weisen Molmassen von etwa 1.500 bis 3.000 auf. Eine Morphologieverbesserung bleibt unerwähnt.

Auch aus der DE-A-22 02 216 ist in allgemeiner Form die Verwendung von Wachsen als Zusätze zu Polypropylenfolien bekannt. Wiederum fehlen Hinweise auf Polypropylenwachse der in der vorliegenden Erfindung verwendeten Art sowie auf eine Möglichkeit der Verbesserung des Reckverhaltens.

Ein Verfahren gemäß dem Oberbegriff des Anspruches 1 ist aus der US-A-4 045 515 bekannt. Im Patent US-A-4045515 wird beschrieben, daß sich das biaxiale Recken von Polypropylenfolien durch Zusatz wenigstens eines Ethylenpolymers verbessern läßt, so daß eine Mischung gebildet wird, die eine mathematisch-physikalische Beziehung erfüllt, in die die Brechungsindices der Folie, gemessen in verschiedenen Richtungen, eingehen. Ein Zusatz von Polypropylenwachs (Molekulargewicht von 1.000 bis 20.000) ist lediglich als Zusatz von einem von vielen möglichen zusätzlichen Additiven ohne Bezugnahme auf die Reckeigenschaften der Folie erwähnt.

Im Dokument EP-A-563 818 werden Polyolefinformmassen, insbesondere zur Verwendung für die Herstellung von harten Formkörpern beschrieben, die ein Polyolefinwachs, insbesondere Polypropylenwachs, mit einem M_{w}-Wert von 1000 bis 50000 g/mol enthalten.

Im Rahmen der vorliegenden Anmeldung wird als Polypropylenwachs ein isotaktisches Polymeres des Propens bezeichnet, das sich von einem üblichen isotaktischen Polypropylen-Ausgangsmaterial für die Folienherstellung im wesentlichen durch einen niedrigeren Polymerisationsgrad und eine hohe Einheitlichkeit, d.h. eine relativ enge Molekulargewichtsverteilung, unterscheidet. Im Rahmen der vorliegenden Erfindung wird unter Polypropylenwachs insbesondere ein isotaktisches Homopolymeres des Propens mit einem Gewichtsmittel des Durchschnittsmolekulargewichts M_{w} von mehr als 8.000 g/mol, insbesondere im Bereich von etwa 12.000 bis etwa 50.000 g/mol, verstanden. Die Polypropylenwachse weisen trotz ihres relativ niedrigen Molekulargewichts bereits die wichtigsten thermischen und mechanischen Eigenschaften der konventionellen höhermolekulargewichtigen Polypropylen-Homopolymeren auf. Aufgrund ihrer wesentlich kürzeren Molekülketten kommt es bei ihnen jedoch nicht zu dauerhaften Verknotungen und Verschlaufungen, und die vergleichsweise große Beweglichkeit der kurzen Kettenmoleküle von Polypropylenwachsen führt zu größeren Schmelz- und Kristallisationsgeschwindigkeiten und zeigt sich insbesondere durch sehr geringe Schmelzflußviskositäten und durch Schmelzflußraten, die Werte über etwa 3.000 g/10min bei 230°C (DIN 53735) aufweisen.

Bei den Untersuchungen, die zur vorliegenden Erfindung führten, wurden u.a. zwei Typen von Polypropylen-Wachsen näher untersucht, die gleichzeitig derzeit bevorzugte Ausführungsformen der vorliegenden Erfindung repräsentieren. Die beiden Wachse sind in Pulver- oder Granulatform erhältlich und werden als Typ A und Typ B bezeichnet. Sie können wie folgt charakterisiert werden:
- Typ A:: homopolymeres Polypropylenwachs
Molmasse M_{w} ca. 36.000 g/mol
Kristallinität: 55,6% (Differential Scanning Calorimetry, DSC) Kristallinität: 70% (Röntgenanalyse)
Schmelzpunkt Fₘ (DSC): 158 - 162°C
Tropfpunkt (Ubbelohde): 165 - 170°C
Schmelzviskosität (200°C): 800- 1200 mm²/s
Kristallisationstemperatur Tᵣₑₖ: 114°C
- Typ B:: homopolymeres Polypropylenwachs
Molmasse M_{w} ca. 17.000 g/mol
Kristallinität: 47,5% (DSC)
Kristallinität: 65% (Röntgenanalyse)
Schmelzpunkt Fₘ (DSC): 156 - 160°C
Tropfpunkt (Ubbelohde): 158 - 165°C
Schmelzviskosität (200 °C): 90 - 125 mm²/s
Kristallisationstemperatur Tᵣₑₖ: 110°C

Beide Produkte zeichnen sich durch eine relativ hohe Einheitlichkeit aus.

Die Polypropylenwachse weisen eine sehr gute Verträglichkeit gegenüber Polypropylenkunststoffen sowie eine hohe Thermostabilität auf.

Es hat sich herausgestellt, daß sie dann, wenn sie in geeigneten Mengen, die üblicherweise im Bereich von 2 bis 10 Massenprozent, bezogen auf das gesamte Polypropylen-Ausgangsmaterial einschließlich Additiv(e), liegen, einem einsatzfähigen Polypropylen-Ausgangsmaterial, wie es eingangs definiert wurde, für die Herstellung biaxial orientierter Polypropylenfolien zugegeben werden, insbesondere unter den Bedingungen des sequentiellen Reckens zu einer außerordentlich schnellen Relaxation der Polypropylenfolie führen, so daß einerseits die Abrißhäufigkeit vermindert wird und ein Recken mit höheren Geschwindigkeiten als gegenwärtig möglich wird, nämlich mit 350 m/min und höher bis hinauf zu 500 m/min. Bei einem Recken mit niedrigeren Maschinengeschwindigkeiten im Bereich auch heute schon angewandter Reckgeschwindigkeiten oder beim simultanen biaxialen Recken äußert sich die schnelle Relaxation der Folie durch eine erhöhte Prozeßstabilität und eine verbesserte Produktqualität im Sinne einer Herstellung hochwertiger biaxial orientierter Polypropylenfolien mit hoher Gleichmäßigkeit.

Das Polypropylenwachs wird einem einsatzfähigen Polypropylen-Homopolymerisat gemäß der obigen Definition für die Folienherstellung auf irgendeine der bekannten Weisen zugegeben. Das Wachs kann somit dem Polypropylen dadurch zugegeben werden, daß man ein einheitliches Einsatzmaterial herstellt, indem man ein homopolymeres Polypropylen aufschmilzt, das Polypropylenwachs zugibt und die erhaltene Schmelze homogenisiert und wieder erstarren läßt und dann z.B. in Granulatform in die Anlage für die Folienherstellung einspeist. Es ist jedoch auch möglich, bei der Folienherstellung Granulate aus einem üblichen Polypropylen-Homopolymeren im Gemisch mit einem Granulat aus dem Polypropylenwachs oder einer homogenen Vormischung aus Polypropylen mit einem hohen Wachsanteil einzusetzen und die Herstellung der für die Folienherstellung erforderlichen homogenen Schmelze unmittelbar vor oder während der Extrusion der Schmelze vorzunehmen. Es ist auch möglich, bei der Direktfolienherstellung die flüssige Schmelze aus der Polymerisation bei der Zugabe der Additive auch mit dem Polypropylenwachs zu versetzen und über einen Mischextruder der Düse zuzuführen.

Der die Wirkung des Zusatzes des Polypropylenwachses bedingende morphologische Vorgang besteht darin, daß sich die kürzeren Molekülketten des Polypropylenwachses bei der Erstarrung der Primärfolie und der anschließenden teilweisen Kristallisation unter Bildung von kristallinen Bereichen (α-Sphärolithen) mit Lamellenstruktur zusammen mit nicht-kristallisierbaren Einheiten, die Verzweigungspunkte, unlösbare Verschlaufungen, nicht-isotaktische Sequenzen usw. enthalten, zwischen den sich bildenden kristallinen Bereichen in den interfibrillären Räumen anreichern. Bei der Verstreckung, bei der es zu einem gegenseitigen Gleiten von teilkristallinen Mikrofibrillen innerhalb der Folienstruktur sowie zum Abwickeln der kristallinen Lamellen unter Ausbildung einer fibrillären Struktur kommt, lagern sich die Polypropylenwachse in den interfibrillären Räumen ein und verhindern dadurch aufgrund ihrer geringen Wechselwirkungen mit den molekularen Fibrillenstrukturen in der Folie einen Aufbau von Spannungen bzw. führen zu einer schnellen Relaxation von temporär auftretenden lokalen Spannungen. Das Ergebnis ist ein verbessertes Reckverhalten, das sich unter den bereits zum Stand der Technik gehörenden Bedingungen von Maschinengeschwindigkeiten von weniger als 350 m/min in einer verbesserten Produktqualität äußert und das es außerdem ermöglicht, das Verstrecken als Hochgeschwindigkeitsverstrecken mit Geschwindigkeiten im Bereich von 350 m/min bis hinauf zu 500 m/min durchzuführen.

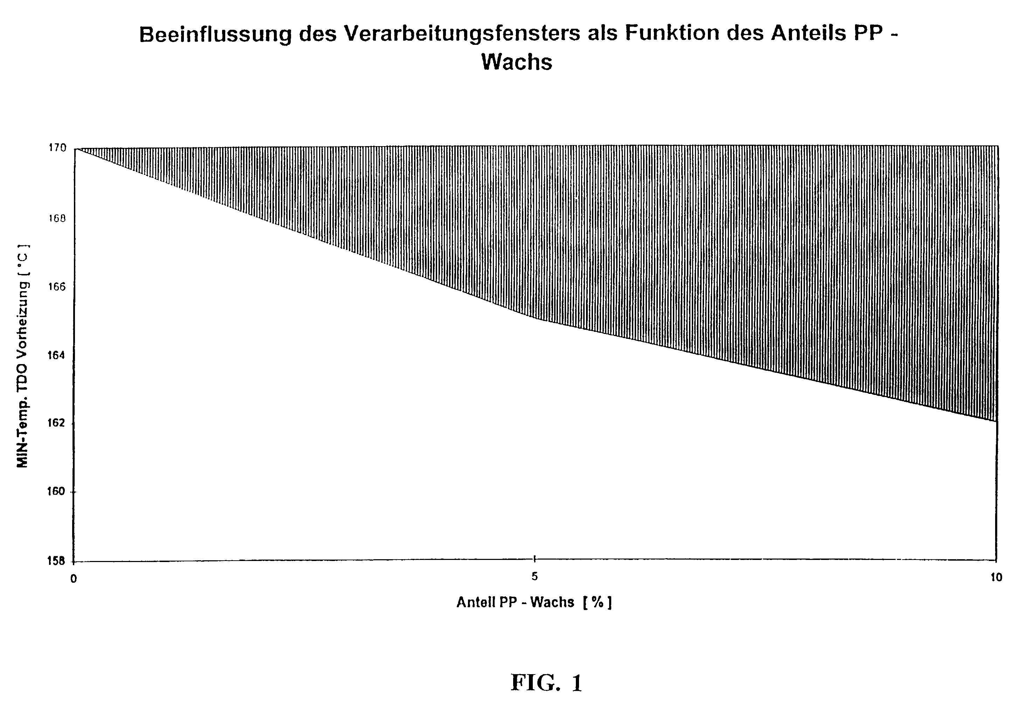

Die Veränderung des Verhaltens von Folien aus Polypropylen-Homopolymeren beim sequentiellen biaxialen Recken durch einen Zusatz von Polypropylenwachsen wurde in verschiedenen Versuchen und Modellversuchen getestet. Ein derartiger Modellversuch wird nachfolgend unter Bezugnahme auf eine Figur 1 noch näher beschrieben.

### Modellversuch

Unter Verwendung eines handelsüblichen Polypropylen-Homopolymeren mit einem isotaktischen Anteil von ca. 96 % und einer Schmelzflußrate von 3g/10 min wurden verschiedene Ausgangsmischungen für die Herstellung von Polypropylenfolien einer Enddicke von 20 µm durch sequentielles biaxiales Recken hergestellt, die sich durch die Menge des zugesetzten Polypropylenwachses unterschieden.

Das Polypropylenwachs wurde dem Polypropylen-Homopolymeren jeweils in Form einer Mischung aus gleichen Teilen der in der Beschreibung näher charakterisierten Polypropylenwachse Typ A und Typ B zugesetzt, wobei der Gesamtanteil an zugesetzter Polypropylenwachsmischung zwischen 0 und 10 Massen-%, bezogen auf die Gesamtmischung, variiert wurde.

Unter Verwendung der genannten Ausgangsmischungen wurden Folien hergestellt, wobei die Mindesttemperaturen ermittelt wurden, auf die die aus den genannten Ausgangsmischungen erhaltenen Primärfolien nach ihrem Recken in Längsrichtung in einem Verhältnis von 6,12:1 vor dem Querverstrecken in einem Verhältnis von 9:1 erwärmt werden mußten, damit insgesamt ein zufriedenstellendes biaxiales Recken und eine gute Qualität der Folienendprodukte erhalten wurden. Die genannte Mindesttemperatur wird dabei angegeben als die Temperatur der Luft im Ofen für die Vorheizung der Folie vor dem Recken in Querrichtung (TDO).

Es zeigte sich, daß ohne Zusatz von Polypropylenwachs eine Vorheizung auf eine Temperatur von mindestens 170°C erforderlich war. Bei Verwendung einer Ausgangsmischung mit einem Anteil von ingesamt 5 Massen-% Polypropylenwachs erniedrigte sich diese Temperatur auf 165°C, und bei einem Anteil von insgesamt 10 Massen-% erniedrigte sich diese Temperatur weiter auf etwa 162°C.

Die Qualität der Endfolien einer Dicke von 20 µm war, insbesondere auch im Hinblick auf ihre mechanischen Eigenschaften, in jedem Falle ausgezeichnet und unterschied sich nicht nennenswert.

Die Absenkung der Mindesttemperatur bei der Vorheizung durch steigende Polypropylenwachsanteile entspricht in der Praxis einer Verbesserung des Reckverhaltens, die sich als Vergrößerung des sog. Verarbeitungsfensters äußert.

Die beigefügte Figur verdeutlicht die erhaltenen Ergebnisse.

Die Vergrößerung des Verarbeitungsfensters ermöglicht einerseits ein Zurücknehmen der TDO-Vorheiztemperatur, ohne daß es zu Folienabrissen beim biaxialen Verstrecken kommt. Andererseits ermöglicht die daraus ableitbare wesentlich stabilere Verarbeitbarkeit von Folien aus den Polypropylenwachs enthaltenden Polypropylen-Homopolymer-Ausgangsmischungen ein stabiles Verstrecken auch noch bei extrem hohen Reckgeschwindigkeiten.

## Patentansprüche

1. Verfahren zur Herstellung einer biaxial orientierten Polypropylenfolie, bei dem man
- ein Polypropylen-Ausgangsmaterial und einen Polypropylenwachszusatz bereitstellt.
- diese aufschmilzt und aus der Schmelze durch Extrusion und Abkühlen des Extrudats eine Primärfolie herstellt,
- die Primärfolie durch Wiedererwärmen auf Recktemperatur bringt,
- biaxial in Maschinenrichtung (MDO) und Querrichtung (TDO) reckt, und zwar entweder sequentiell oder simultan,
- die gereckte biaxial orientierte Polypropylenfolie nach dem Abkühlen aufwickelt,
**gekennzeichnet durch** ein Gewichtsmittel des Durchschnittsmolekulargewichts M_{w} des Polypropylenwachses von mehr als 8.000 g/mol und eine Durchführung des biaxialen Reckens bei Maschinengeschwindigkeiten von mehr als 350 m/min.

2. Verfahren nach Anspruch 1, **dadurch gekennzeichnet, daß** man das biaxiale Recken bei Maschinengeschwindigkeiten im Bereich von 350 bis 500 m/min durchführt.

3. Verfahren nach Anspruch 1 oder 2, **dadurch gekennzeichnet, daß** man das Polypropylenwachs in Mengen von 2 bis 10 Massen-%, bezogen auf das gesamte Polypropylen-Ausgangsmaterial einschließlich Additiv(en), zusetzt.

4. Verfahren nach einem der Ansprüche 1 bis 3, **dadurch gekennzeichnet, daß** das Polypropylenwachs ein isotaktisches Polypropylenwachs mit einem Gewichtsmittel des Durchschnittsmolekulargewichts M_{w} im Bereich von 12.000 bis 50.000 g/mol ist.

5. Verwendung eines Polypropylenwachses mit einem Gewichtsmittel des Durchschnittsmolekulargewichts M_{w} von mehr als 8.000 g/mol als Additiv zu einem Polypropylen-Ausgangsmaterial für die Herstellung von biaxial orientierten Polypropylenfolien unter intermediärer Herstellung von Polypropylen-Primärfolien und biaxialem Recken der wiedererwärmten Polypropylen-Primärfolien mit hohen Maschinengeschwindigkeiten von mehr als 350 m/min.

6. Verwendung nach Anspruch 5 eines Polypropylenwachses als Additiv für die Herstellung von biaxial orientierten Polypropylenfolien durch biaxiales Recken mit hohen Maschinengeschwindigkeiten im Bereich von 350 bis 500 m/min.

7. Verwendung nach Anspruch 5 oder 6 von Polypropylenwachsen mit einem Gewichtsmittel des Durchschnittsmolekulargewichts M_{w} im Bereich von 12.000 bis 50.000 g/mol.

8. Verwendung nach einem der Ansprüche 5 bis 7 von Polypropylenwachsen in Mengen von 2-10 Massen-%, bezogen auf die Gesamtmischung aus Polypropylen und Additiv(en) im Ausgangsmaterial.

9. Verwendung nach einem der Ansprüche 5 bis 8 eines isotaktischen Polypropylenwachses.

## Claims

1. Process for producing a biaxially oriented polypropylene foil, in which
- a polypropylene starting material and a polypropylene wax additive are prepared,
- these are melted and a primary foil is produced from the melt by extrusion and cooling of the extrudate,
- the primary foil is brought to the orientation temperature by reheating
- and oriented biaxially in the machine direction (MDO) and transverse direction (TDO), either sequentially or simultaneously,
- the stretched biaxially oriented polypropylene foil is rolled up after cooling,
**characterized by** a weight average of the average molecular weight M_{w} of the polypropylene wax of more than 8000 g/mol and by carrying out the biaxial orientation at machine speeds of more than 350 m/min.

2. Process according to Claim 1, **characterized in that** the biaxial orientation is carried out at machine speeds in the range from 350 to 500 m/min.

3. Process according to Claim 1 or 2, **characterized in that** the polypropylene wax is added in amounts of from 2 to 10% by mass, based on the total polypropylene starting material including additive(s).

4. Process according to any of Claims 1 to 3, **characterized in that** the polypropylene wax is an isotactic polypropylene wax having a weight average of the average molecular weight M_{w} in the range from 12,000 to 50,000 g/mol.

5. Use of a polypropylene wax having a weight average of the average molecular weight M_{w} of more than 8000 g/mol as an additive for a polypropylene starting material for producing biaxially oriented polypropylene foils with intermediate production of polypropylene primary foils and biaxial orientation of the reheated polypropylene primary foils at high machine speeds of more than 350 m/min.

6. Use according to Claim 5 of a polypropylene wax as an additive for the production of biaxially oriented polypropylene foils by biaxial orientation at high machine speeds in the range from 350 to 500 m/min.

7. Use according to Claim 5 or 6 of polypropylene waxes having a weight average of the average molecular weight M_{w} in the range from 12,000 to 50,000 g/mol.

8. Use according to any of Claims 5 to 7 of polypropylene waxes in amounts of 2-10% by mass, based on the total mixture of polypropylene and additive(s) in the starting material.

9. Use according to any of Claims 5 to 8 of an isotactic polypropylene wax.

## Revendications

1. Procédé de fabrication d'une feuille de polypropylène à orientation biaxiale, dans lequel :
- on prépare un matériau de départ en polypropylène et un additif de cire de polypropylène,
- on le fait fondre et on réalise une feuille primaire à partir de la masse fondue par extrusion et par refroidissement du produit extrudé,
- on amène la feuille primaire par réchauffement à la température d'étirage,
- on l'étire biaxialement en direction de la machine (MDO) et en direction transversale (TDO), et ceci soit de façon séquentielle soit simultanée,
- on enroule la feuille de polypropylène étirée à orientation biaxiale après le refroidissement,
**caractérisé par** une moyenne pondérale présentant un poids moléculaire moyen M_{w} de la cire de polypropylène de plus de 8.000 g/mole et par une exécution de l'étirage biaxial à des vitesses de la machine de plus de 350 m/min.

2. Procédé selon la revendication 1, **caractérisé en ce que** l'on exécute l'étirage biaxial à des vitesses de la machine dans la plage de 350 à 500 m/min.

3. Procédé selon l'une ou l'autre des revendications 1 et 2, **caractérisé en ce que** l'on ajoute la cire de polypropylène à des quantités de 2 à 10 % en masse par rapport à la totalité du matériau de départ en polypropylène, y compris le ou les additifs.

4. Procédé selon l'une quelconque des revendications précédentes, **caractérisé en ce que** la cire de polypropylène est une cire de polypropylène isotactique avec une moyenne pondérale du poids moléculaire moyen M_{w} dans la plage de 12.000 à 50.000 g/mole.

5. Application d'une cire de polypropylène avec une moyenne pondérale du poids moléculaire moyen M_{w} de plus de 8.000 g/mole en tant qu'additif à un matériau de départ en polypropylène pour la production de feuilles de polypropylène à orientation biaxiale, avec production intermédiaire de feuilles de polypropylène primaires et avec étirage biaxial des feuilles de polypropylène primaires réchauffées à des vitesses élevées de la machine de plus de 350 m/min.

6. Application selon la revendication 5 d'une cire de polypropylène en tant qu'additif pour la production de feuilles de polypropylène à orientation biaxiale, avec étirage biaxial à des vitesses élevées de la machine dans la plage de 350 à 500 m/min.

7. Application selon l'une ou l'autre des revendications 5 et 6 de cires de polypropylène avec une moyenne pondérale du poids moléculaire moyen M_{w} dans la plage de 12.000 à 50.000 g/mole.

8. Application selon l'une quelconque des revendications 5 à 7 de cires de polypropylène à des quantités de 2 à 10 % en masse par rapport au mélange total de polypropylène et d'additif(s) dans le matériau de départ.

9. Application selon l'une quelconque des revendications 5 à 8 d'une cire de polypropylène isotactique.
